# EUROPÄISCHE PATENTSCHRIFT

(11) **EP 3 583 257 B1**
(45) Veröffentlichungstag und Bekanntmachung des Hinweises auf die Patenterteilung: **24.03.2021**
(21) Anmeldenummer: 18704617.2
(22) Anmeldetag: 31.01.2018
(51) Int. Cl.: D01G 15/28

(54) **VERFAHREN ZUM BETREIBEN EINER KARDE SOWIE KARDE**
METHOD FOR OPERATING A CARD, AND CARD
PROCÉDÉ DE FONCTIONNEMENT D'UNE CARDE, ET CARDE

(30) Priorität: 15.02.2017 CH 1742017
(43) Veröffentlichungstag der Anmeldung: 25.12.2019
(73) Patentinhaber: Maschinenfabrik Rieter AG, 8406 Winterthur (CH)
(72) Erfinder: BROSE, Thomas, 8406 Winterthur (CH)
(86) Internationale Anmeldenummer: PCT/IB2018/050585
(87) Internationale Veröffentlichungsnummer: WO 2018/150283

(56) Entgegenhaltungen:
- EP-A1- 0 627 508
- EP-A1- 3 012 361
- WO-A1-2006/119655
- DE-A1- 3 913 996
- DE-A1-102006 058 274

## Beschreibung

Die vorliegende Erfindung betrifft ein Verfahren zum Betreiben einer Karde, die einen Tambour mit einer Garnitur eines bestimmten Garniturtyps und zu diesem gegenüberliegende Teile mit einer Oberflächenstruktur aufweist, wobei der Abstand zwischen der Garnitur des Tambours und einem oder mehreren der gegenüberliegenden Teile und/oder eine von diesem Abstand abhängige Größe bestimmt wird. Des Weiteren betrifft die Erfindung eine Karde, aufweisend einen Tambour mit einer Garnitur eines bestimmten Garniturtyps und zu diesem gegenüberliegende Teile mit einer Oberflächenstruktur, mit einer Messvorrichtung zur Bestimmung des Abstandes zwischen der Garnitur des Tambours und einem oder mehreren der gegenüberliegenden Teile und/oder einer von diesem Abstand abhängigen Größe, wobei die Messvorrichtung eine Kapazitätsmesseinrichtung zur Bestimmung einer elektrischen Kapazität aufweist.

Die Qualität des von einer Karde hergestellten Faserbandes hängt unter anderem vom Abstand der Garnitur des Tambours zu diesem gegenüberliegenden Teilen, beispielsweise Deckel oder Wanderdeckel, ab. Dieser Abstand muss also präzise eingestellt werden. Um eine hohe Qualität des produzierten Faserbandes zu gewährleisten, ist es zudem notwendig, den Abstand der Garnitur des Tambours zu diesem gegenüberliegenden Teilen in regelmäßigen zeitlichen Abständen zu kontrollieren. Eine Karde mit Fühlern, die diesen Abstand überprüfen, ist beispielsweise aus der Patentschrift DE 39 13 996 A1 bekannt. Die Fühler sind dabei an den linken und rechten Zylinderflanschen des Tambours angeordnet. Nachteilig bei dieser Lösung ist, dass die Fühler aufwendig justiert werden müssen, damit der von den Fühlern gemessene Abstand einem Abstand zwischen der Garnitur des Tambours und diesem gegenüberliegenden Teilen zugeordnet werden kann. Außerdem ist eine recht aufwendige Verkabelung der Fühler notwendig. Weiter offenbart die DE 10 2006 058274 A1 eine Messung der elektrischen Kapazität zwischen den in einem Abstand einander gegenüberliegenden Bauteilen. Bei Abweichung von einer Soll-Kapazität ist ein Anzeigevorgang oder ein Schaltvorgang auslösbar. Nachteilig dabei ist, dass keine direkte Bestimmung des Abstandes möglich ist, sondern ein vorbestimmter Abstand über die Soll-Kapazität erreicht wird.

Aufgabe der vorliegenden Erfindung ist es somit, die genannten Nachteile zu beseitigen und eine Karde mit einer einfachen aber präzisen Abstandsmessung sowie ein Verfahren zum Betreiben einer solchen Karde vorzuschlagen.

Die Aufgabe wird gelöst durch ein Verfahren zum Betreiben einer Karde sowie eine Karde mit den Merkmalen der unabhängigen Patentansprüche.

Vorgeschlagen wird ein Verfahren zum Betreiben einer Karde, die einen Tambour sowie zu diesem gegenüberliegende Teile aufweist. Der Tambour weist dabei eine Garnitur eines bestimmten Garniturtyps auf. Die gegenüberliegenden Teile sind beispielsweise Festdeckel, Wanderdeckel, Messer, Abdeckelemente und/oder Luftleitbleche. Sie weisen eine Oberflächenstruktur auf, die beispielsweise im Fall eines Fest- oder Wanderdeckels eine Garnitur ist, oder im Fall eines Abdeckelements lediglich glatt ist.

Beim Betreiben der Karde wird der Abstand zwischen der Garnitur des Tambours und einem oder mehreren der gegenüberliegenden Teile und/oder eine von diesem Abstand abhängige Größe bestimmt. Da der Abstand zwischen der Garnitur des Tambours und den gegenüberliegenden Teilen die Qualität des produzierten Faserbandes wesentlich beeinflusst, ist die Bestimmung dieses Abstandes von großer Bedeutung.

Erfindungsgemäß ist der Tambour gegen die gegenüberliegenden Teile elektrisch isoliert. Beim Betreiben der Karde wird dann eine elektrische Kapazität zwischen dem Tambour und einem oder mehreren der gegenüberliegenden Teile gemessen. Aus der gemessenen elektrischen Kapazität wird sodann der Abstand beziehungsweise die vom Abstand abhängige Größe bestimmt. Da die elektrische Kapazität unter anderem vom Abstand abhängt (man kann das System Tambour und gegenüberliegende Teile gewissermaßen als Plattenkondensator auffassen), ist die elektrische Kapazität selbst schon eine vom Abstand abhängige Größe.

Zur Messung der elektrischen Kapazität genügt es, den Tambour und die gegenüberliegenden Teile jeweils mit einem elektrischen Anschluss zu versehen, es sind also keine aufwendigen Verkabelungen notwendig. Die beiden Anschlüsse werden dann mit einer Kapazitätsmesseinrichtung verbunden.

Die Kapazitätsmesseinrichtung weist beispielsweise eine Wechselspannungsquelle und Mittel zum Messen des Stromes auf. Die Wechselspannungsquelle kann dabei sowohl eine sinusförmige als auch eine Rechtecks- oder Dreiecks-Spannung liefern. Auch andere zeitliche Verläufe der Spannung sind denkbar, verkomplizieren aber die Auswertung unnötigerweise. Die Mittel zum Messen des Stromes bestimmen insbesondere die Größe des Stromes, können aber zusätzlich noch den zeitlichen Verlauf, insbesondere in Bezug auf den zeitlichen Verlauf der Spannung, bestimmen. Durch eine einfache Analyse ergibt sich damit die elektrische Kapazität zwischen der Garnitur des Tambours und dem oder den gegenüberliegenden Teilen.

Auch andere Kapazitätsmesseinrichtungen sind denkbar, beispielsweise solche, die bei einem vorgegebenen Strom die Spannung messen, oder solche, die die Resonanzfrequenz eines mit der Kapazität gebildeten LC-Schwingkreises messen.

Für den Fall, dass die Kapazität zwischen dem Tambour und mehreren der gegenüberliegenden Teile gemessen werden soll, können mehrere Kapazitätsmesseinrichtungen vorgesehen sein, so dass jedem der gegenüberliegenden Teile eine Kapazitätsmesseinrichtung zugeordnet ist. Es ist aber auch denkbar, dass nur eine oder einige wenige (also weniger als die Anzahl der zu messenden gegenüberliegenden Teile) Kapazitätsmesseinrichtungen vorgesehen sind. In diesem Fall werden die gegenüberliegenden Teile nacheinander mit einer der Kapazitätsmesseinrichtungen verbunden. Dies kann durch Umstecken der Anschlüsse, durch dementsprechende Schalter oder vorzugsweise durch eine elektronische Schaltung realisiert werden. Der Abstand bzw. die vom Abstand abhängige Größe wird dann nacheinander für die einzelnen gegenüberliegenden Teile bestimmt.

Ein weiterer Vorteil der Erfindung ist, dass zur Messung des Abstandes keine separaten Fühler und/oder Sensoren benötigt werden, die sodann aufwendig justiert werden müssten, da die Garnitur des Tambours und die Oberfläche des oder der gegenüberliegenden Teile selbst Bestandteile der Messvorrichtung sind.

Vorteilhafterweise wird der Abstand bzw. die vom Abstand abhängige Größe angezeigt. Dies kann beispielsweise durch ein Display erfolgen, das den numerischen Wert des Abstandes bzw. der vom Abstand abhängigen Größe anzeigt. Die Anzeige kann aber auch durch zwei Lichtquellen erfolgen, wobei die eine leuchtet, wenn sich der Abstand in einem vorgegebenen Bereich befindet, und die andere leuchtet, wenn der Abstand außerhalb dieses Bereichs ist. Diese Anzeigen zeigen damit dem Bedienpersonal an, ob der Abstand die richtige Größe aufweist, oder ob eine Störung vorliegt und/oder eine Einstellung vorgenommen werden muss.

Es ist auch von Vorteil, wenn bei Unterschreiten eines Minimalwertes und/oder bei Überschreiten eines Maximalwertes des Abstandes beziehungsweise der vom Abstand abhängigen Größe ein optischer und/oder akustischer Alarm ausgelöst wird. So wird das Bedienpersonal auf das Vorliegen einer Störung oder die Notwendigkeit einer Einstellung aufmerksam gemacht und es können unverzüglich Maßnahmen zur Behebung der Störung bzw. eine Einstellung vorgenommen werden. Somit wird das Risiko einer Beschädigung der Karde vermindert, beispielsweise wenn der Abstand zu gering ist und die Garnitur des Tambours die gegenüberliegenden Teile berühren könnte. Auch ermöglicht es dem Bedienpersonal, die Störung bzw. Notwendigkeit einer Einstellung schnell zu erkennen. Somit kann auch schnell wieder zur Produktion von Faserband mit den gewünschten Eigenschaften zurückgekehrt werden. Das Verfahren kann auch zu Wartungszwecken, respektive Festlegung von Reinigungsintervallen, genutzt werden, wenn sich beispielsweise Kardierelemente im Laufe der Zeit mit Fasern, Faserresten oder Verunreinigungen füllen.

Es ist auch vorteilhaft, wenn die Karde eine Einstelleinrichtung zur Veränderung der Position der dem Tambour gegenüberliegenden Teile aufweist und die Position der dem Tambour gegenüberliegenden Teile in Abhängigkeit vom Abstand bzw. der vom Abstand abhängigen Größe verändert wird. So kann automatisch stets der optimale Abstand von der Garnitur des Tambours zu den gegenüberliegenden Teilen eingestellt werden, was die Qualität und Gleichmäßigkeit des produzierten Faserbandes positiv beeinflusst und auch das Bedienpersonal entlastet.

Erfindungsgemäß werden der Garniturtyp des Tambours und/oder die Oberflächenstruktur der gegenüberliegenden Teile eingegeben und/oder erkannt. Der Garniturtyp, also beispielsweise die Anzahl, Größe und/oder Form der Garniturzähne, und die Oberflächenstruktur beeinflussen nämlich die Abhängigkeit der Kapazität vom Abstand. Der Garniturtyp und/oder die Oberflächenstruktur kann dabei vom Bedienpersonal über ein Bedienelement eingegeben werden. Da dies nur einmalig beispielsweise nach einem Garniturwechsel zu erfolgen hat, ist der Mehraufwand für das Bedienpersonal gering. Alternativ dazu kann der Garniturtyp und/oder die Oberflächenstruktur auch automatisch erkannt werden. Denkbar sind hierzu beispielsweise optische oder mechanische Sensoren oder aber auch andere Sensoren im Zusammenspiel mit Markierungen der jeweiligen Garnitur bzw. Oberfläche, beispielsweise durch einen QR-Code oder RFID-Chip.

Die Bestimmung des Abstandes bzw. der vom Abstand abhängigen Größe erfolgt dann aus der gemessenen elektrischen Kapazität in Abhängigkeit von Garniturtyp und/oder Oberflächenstruktur. Im Allgemeinen ist es dazu ausreichend, in die Berechnung einen oder einige wenige Parameter, die den Garniturtyp und/oder die Oberflächenstruktur charakterisieren, einfließen zu lassen.

Vorteilhafterweise wird die Abhängigkeit des Abstandes bzw. der vom Abstand abhängigen Größe von Garniturtyp oder Oberflächenstruktur durch eine Kalibrierung bestimmt. Bei der Kalibrierung wird also zum einen die elektrische Kapazität gemessen und zum anderen direkt der Abstand, insbesondere mit mechanischen Mitteln. Die Bestimmung des Abstandes bzw. der vom Abstand abhängigen Größe kann dann direkt aus den bei der Kalibrierung gemessenen Werten, gegebenenfalls mit Interpolation, erfolgen. Alternativ dazu können aus der Kalibrierung einer oder einige wenige Parameter bestimmt werden, die dann in die Berechnung des Abstands bzw. der vom Abstand abhängigen Größe einfließen.

Des Weiteren ist es von Vorteil, wenn umgebungsabhängige und/oder produktionsabhängige Größen, insbesondere eine Produktionsrate, Art und/oder Feuchtigkeit von Fasern, Klimabedingungen, eingegeben und/oder erkannt werden. Die Eingabe kann dabei wiederum vom Bedienpersonal über ein Bedienfeld erfolgen. Die produktionsabhängigen Größen können aber auch mit Hilfe von entsprechenden Sensoren automatisch erkannt werden. Unterschiedliche produktionsabhängige Größen führen dabei zu einer Veränderung des Dielektrikums zwischen der Garnitur des Tambours und den gegenüberliegenden Teilen, was auch eine Veränderung der elektrischen Kapazität zur Folge hat. Um diese Veränderung zu berücksichtigen, erfolgt die Bestimmung des Abstandes bzw. der vom Abstand abhängigen Größe aus der gemessenen elektrischen Kapazität in Abhängigkeit der produktionsabhängigen Größen. Auch hier ist es wieder vorteilhaft, die Abhängigkeit von den produktionsabhängigen Größen im Rahmen einer Kalibrierung zu bestimmen.

Vorteilhafterweise weist der Tambour und/oder die gegenüberliegenden Teile mindestens zwei axiale, voneinander elektrisch isolierte, Sektionen auf, wobei der Abstand bzw. die vom Abstand abhängige Größe für jede Sektion separat bestimmt wird. Damit kann eine Schiefstellung der gegenüberliegenden Teile zum Tambour erkannt werden.

Des Weiteren ist es von Vorteil, wenn die Position der dem Tambour gegenüberliegenden Elemente in Abhängigkeit vom Abstand bzw. der vom Abstand abhängigen Größe jeder Sektion verändert wird. Dies wird so durchgeführt, dass schließlich der Abstand bzw. die vom Abstand abhängige Größe für jede Sektion einem vorgegebenen, optimalen Wert entspricht. Somit wird eine Schiefstellung der gegenüberliegenden Teile zum Tambour behoben.

Das Verfahren wird gemäß der vorangegangenen Beschreibung durchgeführt, wobei die genannten Merkmale einzeln oder in beliebiger Kombination vorhanden sein können.

Ferner wird eine Karde mit einem Tambour und zu diesem gegenüberliegenden Teilen vorgeschlagen. Dabei weist der Tambour eine Garnitur eines bestimmten Garniturtyps auf. Die gegenüberliegenden Teile sind beispielsweise Festdeckel, Wanderdeckel, Messer, Abdeckelemente und/oder Luftleitbleche. Sie weisen eine Oberflächenstruktur auf, die beispielsweise im Fall eines Fest- oder Wanderdeckels eine Garnitur ist, oder im Fall eines Abdeckelements lediglich glatt ist. Des Weiteren umfasst die Karde eine Messvorrichtung zur Bestimmung des Abstandes zwischen der Garnitur des Tambours und einem oder mehreren der gegenüberliegenden Teile und/oder einer von diesem Abstand abhängigen Größe. Die Bestimmung dieses Abstandes ist von großer Bedeutung, da der Abstand zwischen der Garnitur des Tambours und den gegenüberliegenden Teilen die Qualität des produzierten Faserbandes wesentlich beeinflusst. Die Messvorrichtung weist dabei eine Kapazitätsmesseinrichtung zur Bestimmung einer elektrischen Kapazität auf Weiterhin weist die Karde eine Eingabeeinrichtung und/oder eine Erkennungseinrichtung zur Eingabe bzw. Erkennung des Garniturtyps der Garnitur des Tambours und/oder der Oberflächenstruktur der gegenüberliegenden Teile auf.

Erfindungsgemäß ist der Tambour gegen die gegenüberliegenden Teile elektrisch isoliert und die Kapazitätsmesseinrichtung zur Messung der elektrischen Kapazität zwischen der Garnitur des Tambours und einem oder mehreren der gegenüberliegenden Teile ausgebildet. Der Abstand beziehungsweise die vom Abstand abhängige Größe ist eine Funktion der elektrischen Kapazität und kann folglich aus der elektrischen Kapazität bestimmt werden. Da hier der Tambour und die gegenüberliegenden Teile selbst der Kapazitätsmesseinrichtung zugeordnet sind, entfallen extra Sensoren, die aufwendig kalibriert und verkabelt werden müssen.

Vorteilhafterweise weist die Karde eine Anzeige zur Visualisierung des Abstandes bzw. der vom Abstand abhängigen Größe auf. Eine solche Anzeige kann beispielsweise ein Display sein, das den numerischen Wert des Abstandes bzw. der vom Abstand abhängigen Größe anzeigt. Die Anzeige kann aber auch durch zwei Lichtquellen erfolgen, wobei die eine leuchtet, wenn sich der Abstand in einem vorgegebenen Bereich befindet, und die andere leuchtet, wenn der Abstand außerhalb dieses Bereichs ist. Diese Anzeigen zeigen damit dem Bedienpersonal an, ob der Abstand die richtige Größe aufweist, oder ob eine Störung vorliegt und/oder eine Einstellung vorgenommen werden muss.

Von Vorteil ist es auch, wenn optische und/oder akustische Signalisierungsmittel vorgesehen sind zur Anzeige eines Unterschreitens eines Minimalwertes und/oder eines Überschreitens eines Maximalwertes des Abstandes bzw. der vom Abstand abhängigen Größe. Diese Signalisierungsmittel machen das Bedienpersonal auf das Vorliegen einer Störung oder die Notwendigkeit einer Einstellung aufmerksam, so dass Gegenmaßnahmen vorgenommen werden können.

Des Weiteren ist es vorteilhaft, wenn die Karde eine Einstelleinrichtung zur Veränderung der Position der gegenüberliegenden Teile aufweist. Mit dieser Einstelleinrichtung kann der Abstand zwischen dem Tambour und den gegenüberliegenden Teilen angepasst und auf die optimale Größe eingestellt werden. Dabei ist sowohl eine manuelle Einstelleinrichtung denkbar, die vom Bedienpersonal bedient wird, als auch eine vollautomatische Einstelleinrichtung, die die gegenüberliegenden Teile auf Grund der gemessenen Abstände einstellt, sowie alle möglichen Zwischenstufen.

Vorteilhafterweise ist eine Eingabeeinrichtung und/oder eine Erkennungseinrichtung zur Eingabe bzw. Erkennung von produktionsabhängigen Größen, insbesondere der Produktionsrate, der Art und/oder der Feuchtigkeit der Fasern, vorgesehen. Da der Garniturtyp, die Oberflächenstruktur sowie die produktionsabhängigen Größen die Abhängigkeit des Abstandes von der Kapazität beeinflussen, ist es gemäß der Erfindung vorgesehen bzw. vorteilhaft, wenn sie bei der Bestimmung des Abstandes bzw. der vom Abstand abhängigen Größe aus der Kapazität berücksichtigt werden. Dazu müssen der Messvorrichtung Informationen über den Garniturtyp, die Oberflächenstruktur und/oder die produktionsabhängigen Größen vorliegen. Dies wird dadurch erzielt, dass diese Informationen eingegeben bzw. automatisch erkannt werden.

Schließlich ist es von Vorteil, wenn der Tambour und/oder die gegenüberliegenden Teile mindestens zwei axiale, voneinander elektrisch isolierte, Sektionen aufweisen. Damit kann die Messung des Abstandes bzw. der vom Abstand abhängigen Größe separat für diese mindestens zwei Sektionen durchgeführt werden und damit eine Schiefstellung der gegenüberliegenden Teile zum Tambour erkannt werden. In Verbindung mit einer Einstelleinrichtung, die die Position der gegenüberliegenden Teile und damit den Abstand dieser zum Tambour auf zwei Seiten separat einstellen kann, ist es somit möglich, die Schiefstellung auszugleichen und damit über die gesamte Breite des Tambours einen gleichmäßigen Abstand und folglich eine gleichmäßige Qualität der Fasern zu erzielen.

Die Karde ist gemäß der vorangegangenen Beschreibung ausgebildet, wobei die genannten Merkmale einzeln oder in beliebiger Kombination vorhanden sein können.

Weitere Vorteile der Erfindung sind in den nachfolgenden Ausführungsbeispielen beschrieben. Es zeigen:
- **Figur 1**: einen teilweise schematischen Querschnitt durch eine Karde,
- **Figur 2**: einen teilweise schematischen Querschnitt durch eine weitere Karde.

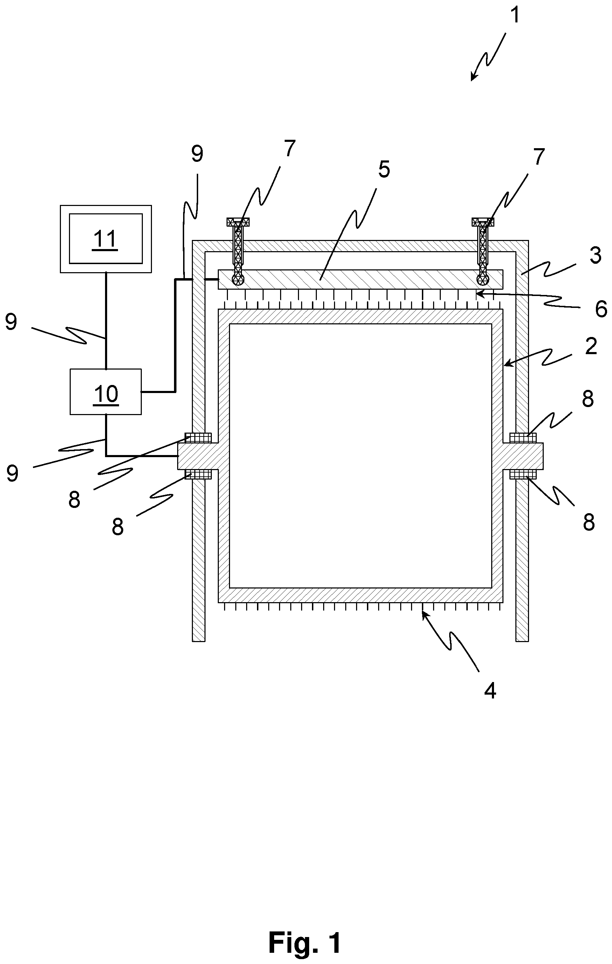

Figur 1 zeigt einen Querschnitt durch eine Karde 1. Ein Tambour 2 der Karde 1 ist in einem Gestell 3 drehbar gelagert. Aus Gründen der Übersichtlichkeit wurde auf die Darstellung eines dem Tambour 2 zugeordneten Antriebsmotors verzichtet. Der Tambour 2 weist an seinem Umfang eine Garnitur 4 auf, die eine Vielzahl an Zähnen aufweist. Ebenfalls am Gestell 3 befestigt ist ein Deckel 5. Der Deckel 5 weist eine Oberfläche 6 auf. Im vorliegenden Ausführungsbeispiel hat die Oberfläche 6 eine Oberflächenstruktur mit einer Vielzahl an Zähnen. Dabei wirken die Zähne der Oberfläche 6 mit den Zähnen der Garnitur 4 zusammen. Der Deckel 5 ist dabei mittels zwei Einstellschrauben 7 am Gestell 3 befestigt, so dass der Abstand zwischen der Oberfläche 6 des Deckels 5 zur Garnitur 4 des Tambours 2 eingestellt werden kann. Um diesen Abstand zu messen, ist der Tambour 2 vom Deckel 5 elektrisch isoliert. In diesem Fall ist die Isolierung durch Isolationselemente 8 im Bereich des Lagers des Tambours 2 realisiert, die Isolation kann aber auch an einer anderen geeigneten Stelle vorgenommen werden.

Der Tambour 2 und der Deckel 5 sind über jeweils ein Kabel 9 mit einer Kapazitätsmesseinrichtung 10 verbunden. Die Kabel 9 sowie die Kapazitätsmesseinrichtung 10 werden hier nur schematisch dargestellt. Dabei ist die Kapazitätsmesseinrichtung 10 zur Messung der elektrischen Kapazität zwischen der Garnitur 4 des Tambours 2 und der Oberfläche 6 des Deckels 5 ausgebildet. Im einfachsten Fall umfasst die Kapazitätsmesseinrichtung 10 eine Wechselspannungsquelle und ein Strommessgerät, wobei Tambour, Wechselspannungsquelle, Strommessgerät und Deckel in Reihe geschaltet sind. Die Amplitude des Stroms ist dabei proportional zur Kapazität zwischen der Garnitur 4 und der Oberfläche 6. Es sind aber auch andere Schaltungen zur Messung der Kapazität möglich.

Da die Kapazität zwischen der Garnitur 4 und der Oberfläche 6 in erster Näherung umgekehrt proportional zum Abstand zwischen der Garnitur 4 und der Oberfläche 6 ist, sind die Kapazität und damit in diesem Ausführungsbeispiel auch die Amplitude des Stroms vom Abstand zwischen der Garnitur 4 und der Oberfläche 6 abhängige Größen. Eine dieser Größen, eine andere vom Abstand abhängige Größe oder der Abstand selbst wird sodann auf einer Anzeige 11 angezeigt, die über ein Kabel 9 mit der Kapazitätsmesseinrichtung 10 verbunden ist.

Der Abstand zwischen der Garnitur 4 und der Oberfläche 6 kann, wie schon oben beschrieben, vom Bedienpersonal über die Einstellschrauben 7 verändert werden. Dabei orientiert sich das Bedienpersonal an der auf der Anzeige 11 angezeigten Größe und verändert den Abstand so lange, bis die Anzeige 11 den gewünschten, optimalen Wert anzeigt.

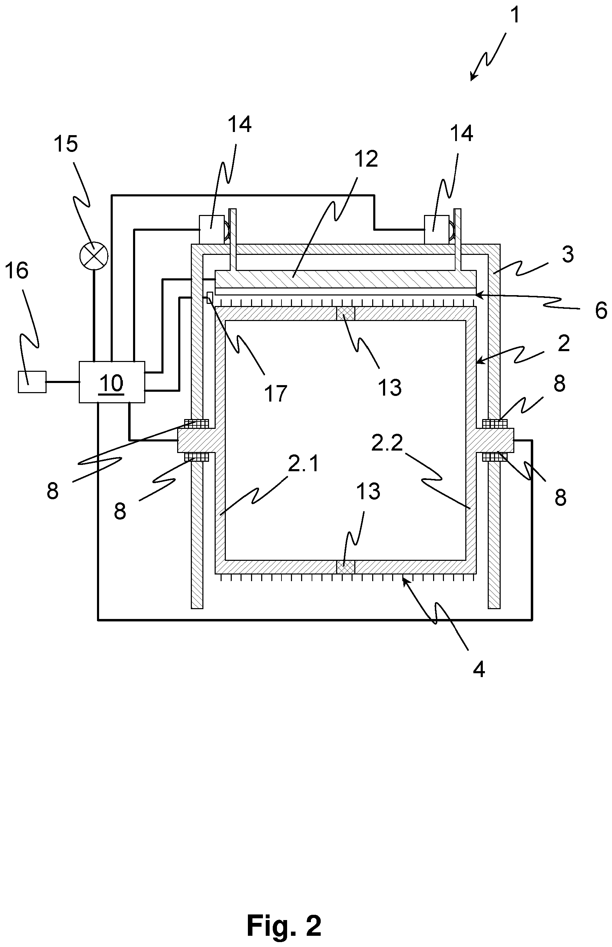

Bei der nachfolgenden Beschreibung des in Figur 2 dargestellten alternativen Ausführungsbeispiels werden für Merkmale, die im Vergleich zum in Figur 1 dargestellten ersten Ausführungsbeispiel in ihrer Ausgestaltung und/oder Wirkweise identisch und/oder zumindest vergleichbar sind, gleiche Bezugszeichen verwendet. Sofern diese nicht nochmals detailliert erläutert werden, entspricht deren Ausgestaltung und/oder Wirkweise der Ausgestaltung und Wirkweise der vorstehend bereits beschriebenen Merkmale.

Im Gegensatz zu Figur 1 geht der Querschnitt durch die Karde 1 der Figur 2 durch ein Abdeckblech 12. Die Oberfläche 6 des Abdeckblechs 12 weist eine glatte Oberflächenbeschaffenheit auf und ist über ein Kabel (das hier der Übersichtlichkeit halber nicht mit einem Bezugszeichen versehen ist) mit der Kapazitätsmesseinrichtung 10 verbunden. Der Tambour 2 ist in zwei voneinander elektrisch isolierte Sektionen 2.1 und 2.2 aufgeteilt. Die Isolation erfolgt dabei über ein Isolationsstück 13. Jede der beiden Sektionen 2.1 und 2.2 ist mit der Kapazitätsmesseinrichtung 10 verbunden, so dass der Abstand von der Garnitur 4 des Tambours 2 zur Oberfläche 6 des Abdeckblechs 12 auf beiden Seiten separat gemessen werden kann. Somit kann eine Schiefstellung des Abdeckblechs 12 in Bezug auf den Tambour 2 erkannt werden. Alternativ dazu oder zusätzlich kann auch das Abdeckblech in zwei oder mehrere voneinander elektrisch isolierte Sektionen aufgeteilt sein.

Die Position des Abdeckblechs 12 ist über zwei Elektromotoren 14 einstellbar. Diese Elektromotoren 14 werden von der Kapazitätsmesseinrichtung 10 gesteuert, so dass eine automatische Einstellung des Abstands zwischen Garnitur 4 und Oberfläche 6 erfolgen kann. Ist die Einstellung des optimalen Abstands aus einem Grund nicht möglich und/oder wird ein vorgegebener Minimalwert unter- bzw. ein vorgegebener Maximalwert überschritten, so wird dies mit einer Warnlampe 15 angezeigt. Das Bedienpersonal kann dann Maßnahmen zur Behebung der Störung ergreifen und/oder die Karde außer Betrieb setzen.

Die Kapazität zwischen der Garnitur 4 und der Oberfläche 6 hängt nicht nur vom Abstand zwischen der Garnitur 4 und der Oberfläche 6 ab, sondern auch vom Garniturtyp der Garnitur 4 und der Oberflächenstruktur der Oberfläche 6. Um den Garniturtyp und die Oberflächenstruktur bei der Berechnung des Abstandes aus der Kapazität berücksichtigen zu können, werden der Garniturtyp und die Oberflächenstruktur über ein Bedienfeld 16, das mit der Kapazitätsmesseinrichtung 10 verbunden ist, eingegeben. Dabei können beispielsweise Codes für den jeweiligen Garniturtyp und die jeweilige Oberflächenstruktur eingegeben werden. Alternativ können direkt Korrekturparameter für die Berechnung eingegeben werden.

In einem alternativen, hier nicht gezeigten, Ausführungsbeispiel, weisen die Garnitur 4 und die Oberfläche 6 QR-Codes oder RFID-Chips auf, die automatisch von einem optischen Sensor bzw. einem RFID-Empfänger ausgelesen werden. Die Eingabe des Garniturtyps und der Oberflächenstruktur über das Bedienfeld 16 entfällt damit.

Im Ausführungsbeispiel der Figur 2 ist ferner ein Sensor 17 zum Erfassen von produktionsabhängigen Größen vorgesehen. Zu den produktionsabhängigen Größen zählen beispielsweise eine Produktionsrate und die Art und/oder Feuchtigkeit der Fasern. Die Produktionsrate steht dabei in direktem Zusammenhang mit der Menge der auf dem Tambour befindlichen Fasern. Menge und Beschaffenheit der Fasern beeinflussen wiederum die Permittivität des Raums zwischen der Garnitur 4 und der Oberfläche 6 und damit die Kapazität zwischen der Garnitur 4 und der Oberfläche 6. Damit der Abstand zwischen der Garnitur 4 und der Oberfläche 6 unter Berücksichtigung dieser Einflüsse bestimmt werden kann, ist der Sensor 17 mit der Kapazitätsmesseinrichtung 10 verbunden und übermittelt ihr die produktionsabhängigen Größen.

Alternativ dazu kann auf den Sensor 17 verzichtet werden und die produktionsabhängigen Größen über das Bedienfeld 16 eingegeben werden. Dies setzt allerdings eine gewisse Konstanz der produktionsabhängigen Größen und/oder viele Eingaben durch das Bedienpersonal voraus.

Die vorliegende Erfindung ist nicht auf die dargestellten und beschriebenen Ausführungsbeispiele beschränkt. Abwandlungen und Kombinationen von Merkmalen im Rahmen der Patentansprüche sind möglich.

### Legende

- 1: Karde
- 2: Tambour
- 2.1: Sektion des Tambours
- 2.2: Sektion des Tambours
- 3: Gestell
- 4: Garnitur
- 5: Deckel
- 6: Oberfläche
- 7: Einstellschraube
- 8: Isolationselement
- 9: Kabel
- 10: Kapazitätsmesseinrichtung
- 11: Anzeige
- 12: Abdeckblech
- 13: Isolationsstück
- 14: Elektromotor
- 15: Warnlampe
- 16: Bedienfeld
- 17: Sensor

## Patentansprüche

1. Verfahren zum Betreiben einer Karde (1), die einen Tambour (2) mit einer Garnitur (4) eines bestimmten Garniturtyps und zu diesem gegenüberliegende Teile (5; 12) mit einer Oberflächenstruktur aufweist, wobei der Abstand zwischen der Garnitur (4) des Tambours (2) und einem oder mehreren der gegenüberliegenden Teile (5; 12) und/oder eine von diesem Abstand abhängige Größe bestimmt wird, **dadurch gekennzeichnet, dass** der Tambour (2) gegen die gegenüberliegenden Teile (5; 12) elektrisch isoliert ist, eine elektrische Kapazität zwischen dem Tambour (2) und einem oder mehreren der gegenüberliegenden Teile (5; 12) gemessen wird und aus der gemessenen elektrischen Kapazität der Abstand beziehungsweise die vom Abstand abhängige Größe bestimmt wird, wobei der Garniturtyp des Tambours (2) und/oder die Oberflächenstruktur der gegenüberliegenden Teile (5; 12) eingegeben und/oder erkannt wird und die Bestimmung des Abstandes bzw. der vom Abstand abhängigen Größe aus der gemessenen elektrischen Kapazität in Abhängigkeit von Garniturtyp und/oder Oberflächenstruktur erfolgt.

2. Verfahren nach dem vorherigen Anspruch, **dadurch gekennzeichnet, dass** der Abstand bzw. die vom Abstand abhängige Größe angezeigt wird.

3. Verfahren nach einem der vorherigen Ansprüche, **dadurch gekennzeichnet, dass** bei Unterschreiten eines Minimalwertes und/oder bei Überschreiten eines Maximalwertes des Abstandes bzw. der vom Abstand abhängigen Größe ein optischer und/oder akustischer Alarm ausgelöst wird.

4. Verfahren nach einem der vorherigen Ansprüche, **dadurch gekennzeichnet, dass** die Karde (1) eine Einstelleinrichtung (7; 14) zur Veränderung der Position der dem Tambour (2) gegenüberliegenden Teile (5; 12) aufweist und die Position der dem Tambour (2) gegenüberliegenden Teile (5; 12) in Abhängigkeit vom Abstand bzw. der vom Abstand abhängigen Größe verändert wird.

5. Verfahren nach einem der vorherigen Ansprüche, **dadurch gekennzeichnet, dass** die Abhängigkeit des Abstandes bzw. der vom Abstand abhängigen Größe von Garniturtyp oder Oberflächenstruktur durch eine Kalibrierung bestimmt wird.

6. Verfahren nach einem der vorherigen Ansprüche, **dadurch gekennzeichnet, dass** produktionsabhängige Größen, insbesondere eine Produktionsrate, Art und/oder Feuchtigkeit von Fasern, eingegeben und/oder erkannt werden und die Bestimmung des Abstandes bzw. der vom Abstand abhängigen Größe aus der gemessenen elektrischen Kapazität in Abhängigkeit der produktionsabhängigen Größen erfolgt.

7. Verfahren nach einem der vorherigen Ansprüche, **dadurch gekennzeichnet, dass** der Tambour (2) und/oder die gegenüberliegenden Teile (5; 12) mindestens zwei axiale, voneinander elektrisch isolierte, Sektionen (2.1, 2.2) aufweisen, wobei der Abstand bzw. die vom Abstand abhängige Größe für jede Sektion (2.1; 2.2) separat bestimmt wird.

8. Verfahren nach Anspruch 7, **dadurch gekennzeichnet, dass** die Position der dem Tambour (2) gegenüberliegenden Teile (5; 12) in Abhängigkeit vom Abstand bzw. der vom Abstand abhängigen Größe jeder Sektion (2.1; 2.2) verändert wird.

9. Karde, aufweisend einen Tambour (2) mit einer Garnitur (4) eines bestimmten Garniturtyps und zu diesem gegenüberliegende Teile (5; 12) mit einer Oberflächenstruktur, mit einer Messvorrichtung zur Bestimmung des Abstandes zwischen der Garnitur (4) des Tambours (2) und einem oder mehreren der gegenüberliegenden Teile (5; 12) und/oder einer von diesem Abstand abhängigen Größe, wobei die Messvorrichtung eine Kapazitätsmesseinrichtung (10) zur Bestimmung einer elektrischen Kapazität aufweist,
**dadurch gekennzeichnet, dass**
der Tambour (2) gegen die gegenüberliegenden Teile (5; 12) elektrisch isoliert ist, die Kapazitätsmesseinrichtung (10) zur Messung der elektrischen Kapazität zwischen der Garnitur (4) des Tambours (2) und einem oder mehreren der gegenüberliegenden Teile (5; 12) ausgebildet ist und eine Eingabeeinrichtung (16) und/oder eine Erkennungseinrichtung (17) zur Eingabe bzw. Erkennung des Garniturtyps der Garnitur (4) des Tambours (2) und/oder der Oberflächenstruktur der gegenüberliegenden Teile (5; 12) vorgesehen ist und der Abstand beziehungsweise die vom Abstand abhängige Größe eine Funktion der elektrischen Kapazität ist.

10. Karde nach dem vorherigen Anspruch, **dadurch gekennzeichnet, dass** eine Anzeige (11) zur Visualisierung des Abstandes bzw. der vom Abstand abhängigen Größe vorgesehen ist.

11. Karde nach einem der Ansprüche 9 oder 10, **dadurch gekennzeichnet, dass** optische und/oder akustische Signalisierungsmittel (15) vorgesehen sind zur Anzeige eines Unterschreitens eines Minimalwertes und/oder eines Überschreitens eines Maximalwertes des Abstandes bzw. der vom Abstand abhängigen Größe.

12. Karde nach einem der Ansprüche 9 bis 11, **dadurch gekennzeichnet, dass** die Karde (1) eine Einstelleinrichtung (7; 14) zur Veränderung der Position der gegenüberliegenden Teile (5; 12) aufweist.

13. Karde nach einem der Ansprüche 9 bis 12, **dadurch gekennzeichnet, dass** eine Eingabeeinrichtung (16) und/oder eine Erkennungseinrichtung (17) zur Eingabe bzw. Erkennung von produktionsabhängigen Größen, insbesondere der Produktionsrate, der Art und/oder der Feuchtigkeit der Fasern, vorgesehen ist.

14. Karde nach einem der Ansprüche 9 bis 13, **dadurch gekennzeichnet, dass** der Tambour (2) und/oder die gegenüberliegenden Teile (5; 12) mindestens zwei axiale, voneinander elektrisch isolierte, Sektionen (2.1, 2.2) aufweisen.

## Claims

1. Method for operating a carding machine (1) which comprises a drum (2), having a clothing (4) of a certain clothing type, and parts (5; 12) opposite said drum having a surface structure, the distance between the clothing (4) of the drum (2) and one or more of the opposing parts (5; 12) and/or a variable dependent on this distance being determined, **characterized in that** the drum (2) is electrically isolated from the opposing parts (5; 12), an electrical capacitance between the drum (2) and one or more of the opposing parts (5; 12) is measured and the distance or the variable dependent on the distance is determined from the measured electrical capacitance, the clothing type of the drum (2) and/or the surface structure of the opposing parts (5; 12) being entered and/or identified and the distance or the variable dependent on the distance being determined from the measured electrical capacitance depending on the clothing type and/or surface structure.

2. Method according to the preceding claim, **characterized in that** the distance or the variable dependent on the distance is displayed.

3. Method according to either of the preceding claims, **characterized in that** when a minimum value of the distance or the variable dependent on the distance is not met and/or when a maximum value of the distance or the variable dependent on the distance is exceeded, an optical and/or acoustic alarm is triggered.

4. Method according to any of the preceding claims, **characterized in that** the carding machine (1) has an adjusting device (7; 14) for changing the position of the parts (5; 12) opposite the drum (2) and the position of the parts (5; 12) opposite the drum (2) is changed depending on the distance or the variable dependent on the distance.

5. Method according to any of the preceding claims, **characterized in that** the dependence of the distance or the variable, dependent on the distance, of the clothing type or surface structure is determined by calibration.

6. Method according to any of the preceding claims, **characterized in that** production-dependent variables, in particular a production rate, type and/or moisture of fibers, are entered and/or identified and the distance or the variable dependent on the distance is determined from the measured electrical capacitance depending on the production-dependent variables.

7. Method according to any of the preceding claims, **characterized in that** the drum (2) and/or the opposing parts (5; 12) have at least two axial sections (2.1, 2.2) that are electrically isolated from one another, the distance or the variable, dependent on the distance, for each section (2.1; 2.2) being determined separately.

8. Method according to claim 7, **characterized in that** the position of the parts (5; 12) opposite the drum (2) is changed depending on the distance or the variable, dependent on the distance, of each section (2.1; 2.2).

9. Carding machine, comprising a drum (2) having a clothing (4) of a certain clothing type and parts (5; 12) opposite said drum having a surface structure, having a measuring apparatus for determining the distance between the clothing (4) of the drum (2) and one or more of the opposing parts (5; 12) and/or a variable dependent on this distance, the measuring apparatus having a capacitance measuring device (10) for determining an electrical capacitance, **characterized in that** the drum (2) is electrically isolated from the opposing parts (5; 12), the capacitance measuring device (10) is designed for measuring the electrical capacitance between the clothing (4) of the drum (2) and one or more of the opposing parts (5; 12), and an input device (16) and/or an identification device (17) is provided for inputting or identifying the clothing type of the clothing (4) of the drum (2) and/or the surface structure of the opposing parts (5; 12), and the distance or the variable dependent on the distance is a function of the electrical capacitance.

10. Carding machine according to the preceding claim, **characterized in that** a display (11) is provided for visualizing the distance or the variable dependent on the distance.

11. Carding machine according to either claim 9 or claim 10, **characterized in that** optical and/or acoustic signaling means (15) are provided for indicating that a minimum value of the distance or the variable dependent on the distance has not been met and/or that a maximum value of the distance or the variable dependent on the distance has been exceeded.

12. Carding machine according to any of claims 9 to 11, **characterized in that** the carding machine (1) has an adjusting device (7; 14) for changing the position of the opposing parts (5; 12).

13. Carding machine according to any of claims 9 to 12, **characterized in that** an input device (16) and/or an identification device (17) is provided for inputting or identifying production-dependent variables, in particular the production rate, the type and/or the moisture of the fibers.

14. Carding machine according to any of claims 9 to 13, **characterized in that** the drum (2) and/or the opposing parts (5; 12) have at least two axial sections (2.1, 2.2) that are electrically isolated from one another.

## Revendications

1. Procédé de fonctionnement d'une carde (1) qui présente un tambour (2) comportant une garniture (4) d'un type particulier et des parties (5 ; 12) opposées à celui-ci et comportant une structure de surface, la distance entre la garniture (4) du tambour (2) et une ou plusieurs des parties (5 ; 12) opposées et/ou une grandeur dépendant de cette distance étant déterminées, **caractérisé en ce que** le tambour (2) est isolé électriquement des parties (5 ; 12) opposées, **en ce qu'**une capacité électrique entre le tambour (2) et une ou plusieurs des parties (5 ; 12) opposées est mesurée et **en ce que** la distance ou la grandeur dépendant de la distance est déterminée à partir de la capacité électrique mesurée, le type de garniture du tambour (2) et/ou la structure de surface des parties (5 ; 12) opposées étant saisis et/ou détectés et la détermination de la distance ou de la grandeur dépendant de la distance étant effectuée à partir de la capacité électrique mesurée en fonction du type de garniture et/ou de la structure de surface.

2. Procédé selon la revendication précédente, **caractérisé en ce que** la distance ou la grandeur dépendant de la distance est affichée.

3. Procédé selon l'une des revendications précédentes, **caractérisé en ce que**, si la distance ou la grandeur dépendant de la distance tombe en dessous d'une valeur minimale et/ou dépasse une valeur maximale, une alarme optique et/ou acoustique est déclenchée.

4. Procédé selon l'une des revendications précédentes, **caractérisé en ce que** la carde (1) présente un dispositif de réglage (7 ; 14) permettant de modifier la position des parties (5 ; 12) opposées au tambour (2), et **en ce que** la position des parties (5 ; 12) opposées au tambour (2) est modifiée en fonction de la distance ou de la grandeur dépendant de la distance.

5. Procédé selon l'une des revendications précédentes, **caractérisé en ce que** la dépendance de la distance ou de la grandeur en fonction de la distance du type de garniture ou de la structure de surface est déterminée par étalonnage.

6. Procédé selon l'une des revendications précédentes, **caractérisé en ce que** des grandeurs dépendant de la production, en particulier une vitesse de production, un type et/ou une humidité de fibres, sont saisies et/ou détectées, et **en ce que** la détermination de la distance ou de la grandeur dépendant de la distance est effectuée à partir de la capacité électrique mesurée en fonction des grandeurs dépendant de la production.

7. Procédé selon l'une des revendications précédentes, **caractérisé en ce que** le tambour (2) et/ou les parties (5 ; 12) opposées présentent au moins deux sections (2.1, 2.2) axiales isolées électriquement l'une de l'autre, la distance ou la grandeur dépendant de la distance étant déterminée séparément pour chaque section (2.1 ; 2.2).

8. Procédé selon la revendication 7, **caractérisé en ce que** la position des parties (5 ; 12) opposées au tambour (2) est modifiée en fonction de la distance ou de la grandeur dépendant de la distance de chaque section (2.1 ; 2.2).

9. Carde, présentant un tambour (2) comportant une garniture (4) d'un type particulier et des parties (5 ; 12) opposées à celui-ci et comportant une structure de surface, comportant un système de mesure permettant de déterminer la distance entre la garniture (4) du tambour (2) et une ou plusieurs des parties (5 ; 12) opposées et/ou une grandeur dépendant de cette distance, le système de mesure présentant un dispositif de mesure de capacité (10) permettant de déterminer une capacité électrique, **caractérisée en ce que** le tambour (2) est isolé électriquement des parties (5 ; 12) opposées, **en ce que** le dispositif de mesure de capacité (10) est conçu pour mesurer la capacité électrique entre la garniture (4) du tambour (2) et une ou plusieurs des parties (5 ; 12) opposées, **en ce qu'**un dispositif de saisie (16) et/ou un dispositif de détection (17) permettant de saisir ou de détecter le type de garniture de la garniture (4) du tambour (2) et/ou la structure de surface des parties (5 ; 12) opposées est prévu, et **en ce que** la distance ou la grandeur dépendant de la distance est une fonction de la capacité électrique.

10. Carde selon la revendication précédente, **caractérisée en ce qu'**un écran (11) est prévu pour la visualisation de la distance ou de la grandeur dépendant de la distance.

11. Carde selon l'une des revendications 9 ou 10, **caractérisée en ce que** des moyens de signalisation optique et/ou acoustique (15) sont prévus pour afficher le fait que la distance ou la grandeur dépendant de la distance tombe en dessous d'une valeur minimale et/ou dépasse une valeur maximale.

12. Carde selon l'une des revendications 9 à 11, **caractérisée en ce que** la carde (1 ) présente un dispositif de réglage (7 ; 14) permettant de modifier la position des parties (5 ; 12) opposées.

13. Carde selon l'une des revendications 9 à 12, **caractérisée en ce qu'**un dispositif de saisie (16) et/ou un dispositif de détection (17) permettant la saisie ou la détection de grandeurs dépendant de la production, en particulier la vitesse de production, le type et/ou l'humidité des fibres, sont prévus.

14. Carde selon l'une des revendications 9 à 13, **caractérisée en ce que** le tambour (2) et/ou les parties (5 ; 12) opposées présentent au moins deux sections (2.1, 2.2) axiales isolées électriquement l'une de l'autre.
